# EUROPÄISCHE PATENTSCHRIFT

(11) **EP 2 019 181 B1**
(45) Veröffentlichungstag und Bekanntmachung des Hinweises auf die Patenterteilung: **26.02.2014**
(21) Anmeldenummer: 08012219.5
(22) Anmeldetag: 07.07.2008
(51) Int. Cl.: E05F 15/00, H01F 38/14, H04B 5/00

(54) **System zur induktiven Signalübertragung**
System for inductive signal transfer
Système de transfert inductif de signal

(30) Priorität: 26.07.2007 DE 102007035520
(43) Veröffentlichungstag der Anmeldung: 28.01.2009
(73) Patentinhaber: Bircher Reglomat AG, 9042 Speicher (CH)
(72) Erfinder: Macher, Heinz, 8200 Schaffhausen (CH); Heck, Maximilian, 79801 Hohentenen a.H. (DE)
(74) Vertreter: Weiss, Peter

(56) Entgegenhaltungen:
- EP-A2- 0 927 918
- DE-A1- 2 903 390
- DE-A1- 19 920 873
- Höft & Wessels: "DECT mit 500Kbit/s durch CLDPS", , 11. Dezember 2005 (2005-12-11), XP002639566, Gefunden im Internet: URL:http://web.archive.org/web/20051211014 211/http://www.hy-line.de/co/communication -products/hersteller/hoeft-wessel/index.ht ml [gefunden am 2011-05-30]
- "Radio Equipment and Systems (RES); Digital European Cordless Telecommunications (DECT); Common Interface (CI); Part 2: Physical Layer (PHL)", ETSI DRAFT; P2_1, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. Second Edition, 23. Juni 2004 (2004-06-23), Seiten 1-46, XP014060843, [gefunden am 2004-06-23]

## Beschreibung

Die Erfindung betrifft ein System nach dem Oberbegriff des Anspruchs 1.

In diesem Zusammenhang wird auf die EP 0 927 918 A2 hingewiesen, welche ein Türüberwachungssystem offenbart. Dort ist beschrieben, wie im Einzelnen ein Trägersignal in Abhängigkeit eines vorgegebenen und/oder tatsächlichen sensorsignals moduliert wird.

Es ist bekannt, Zufahrten oder Zugänge zu Gebäuden oder Grundstücken mit Hilfe von Toren oder Türen der unterschiedlichsten Bauart, beispielsweise Schiebetore bzw. -Türen, Rolltore oder dgl., nachstehend allgemein als Schliesselement bezeichnet, zu verschliessen und hierbei die Bewegungen des Schliesselements über einen steuerbaren Antrieb zu bewerkstelligen.

Beispielsweise offenbart die EP 0 927 918 ein Vorrichtung zum Überwachen einer entlang eines vorgegeben Weges bewegbaren Einrichtung. Die Vorrichtung hat eine Sensoreinrichtung zum Erfassen, eine einzige Modulareinheit, als Konverter. Die Modulareinheit ist so aufgebaut, dass das Trägersignal bei einem von einem vorgegeben Sensorsignal abweichenden Sensorsignal, nicht moduliert wird. Die Auswerteeinheit erzeugt beim Erfassen des unmodulierten Trägersignals ein von einem ersten Überwachungssignal abweichendes zweites Überwachungssignal.

Bei einem derartigen steuerbaren Antrieb sind an die Übertragung und Auswertung von Signalen von dem jeweiligen bewegten Schliesselement zu einer Auswertstelle in der Form eines Schaltgeräts hohe Anforderungen hinsichtlich Schaltsicherheit und - Genauigkeit zu stellen und zwar insbesondere, wenn dieses Prinzip zur Sicherung des bewegten Schliesselements im Zusammenhang mit möglichen Personenschäden eingesetzt wird.

Bekannt ist ferner, sogenannte Endschalter am Schliesselement vorzusehen, die jeweils mit Erreichen der Endlage des Schliesselements, d. h. beim Erreichen seiner Schliess- bzw. Öffnungsstellung, den Antrieb abschalten.

Neben den üblichen Grenzschaltern sind bei derartigen bewegten Schliesselementen auch Sicherheitsschalter erforderlich, die dann ein Signal an das auswertende Schaltgerät abgeben sollen, wenn im Bewegungsbereich Gegenstände oder Personen stehen, an die das bewegte Schliesselement anstossen kann. Hierzu können die Schliesselemente an ihren in Bewegungsrichtung gesehenen Stirnseiten sogenannte Schaltleisten besitzen, die z.B. in der Form eines Gummihohlprofils ausgebildet sein können, das beim unbeabsichtigten Auftreffen auf ein Hindernis zusammengedrückt wird, sodass in seinem Inneren eine Druckwelle entsteht, die einen elektrisch betätigbaren Schalter beaufschlagt, durch den ein Signal an das Schaltgerät abgegeben werden kann, sodass der Antrieb des bewegten Schliesselements stillgesetzt oder umgesteuert werden kann. Ein derartiges Signal gilt es von dem bewegten Schliesselement zum stationären Schaltgerät zu übertragen, was bei der vorliegenden Erfindung in bekannter Weise induktiv erfolgen soll.

Üblicherweise verwendet man dazu eine Leiterschleife, die längs des vorbestimmten Weges des Schliesselements an diesem vorgesehen ist und die mit einem am Schliesselement angebrachten und mit den Schalterleisten elektrisch verbundenen Konverter sowie einer gegenüber dem Schliesselement ortsfesten Spule und einem ortsfesten Schaltgerät zusammenwirkt.

Wenn nun z.B. grosse, verschiebbare Werktore mit einer Lange von 5 - 6 m an beiden ihrer Stirnseiten Schaltleisten besitzen, dann erfordert dies eine relativ lange Verkabelung dieser Schaltleisten, um deren Signal induktiv zum Schaltgerät zu übermitteln. Diese relativ lange Verkabelung bedeutet gleichzeitig ein gewisses Sicherheitsrisiko, zumal der Betrieb bei Werktoren gewöhnlich ziemlich rauh abläuft und die Schaltleisten einschliesslich deren Verkabelung dadurch hoch beansprucht werden und dadurch des öfteren repariert bzw. ausgetauscht werden müssen.

Hier setzt die Erfindung ein, der die Aufgabe zugrunde liegt, ein System zur induktiven Signalübertragung für motorisch angetrieben, insbesondere relativ grosse Schliesselemente zu schaffen, das neben Grenzpositionen, wie "Auf/Zu" auch das Einstellen von Zwischenpositionen und das eine hohe Betriebssicherheit und eine hohe Reparaturfreundlichkeit gewährleistet.

Zur Lösung dieser Aufgabe führen die Kennzeichen der Merkmale des Patentanspruchs 1.

Nach Massgabe der Erfindung ist hierfür jeweils im Bereich jeder Sensoreinrichtung in der Form von Schaltleisten ein Konverter vorgesehen. Jeder Konverter steht dabei für sich durch jeweils individuell auf eine Trägerfrequenz aufmodulierte Frequenzen über die gemeinsame Leiterschleife mittels induktiver Signalübertragung über die gemeinsame Spule mit dem Schaltgerät zur Steuerung der Bewegungen des jeweiligen Schliesselements individuell in Verbindung.

Damit ist vorteilhaft sichergestellt, dass relativ kurze Übertragungswege zwischen Sensor, sprich Schaltleiste, und Konverter gegeben sind, sodass bei einem Defekt eines Sensors nur dieser ausfällt, während die übrigen betriebsbereit bleiben. Ferner ist durch die individuelle Signalkennung der einzelnen Konverter nur eine gemeinsame Leiterschleife erforderlich, sodass insgesamt ein Art Baukastensystem erhalten wird, das zusätzlich auch reparaturfreundlich ist.

Grundsätzlich kann eine Mehrzahl (X1 + X2 + Xn) von durch äussere Einwirkungen betätigbare Sensoreinrichtungen vorgesehen sein, die dann durch eine entsprechende Anzahl von Konvertern durch die individuell modulierten Frequenzen einzeln von dem Schaltgerät erkennbar sind. Dabei können die Sensoreinrichtungen als Schaltleisten, Notausschalter oder dgl. ausgebildet sein, die z.B. nach einem mechanischen, pneumatischen und optischen Prinzip oder mit IR und dgl. arbeiten.

Als Leiterschleife, dient zweckmässigerweise ein zwischen den Endbereichen des Schliesselements gespanntes Drahtseil, mit welchem die jeweiligen Konverter in Verbindung stehen. Dabei können die stufenlosen Bewegungsabläufe des Schliesselements unterbrechbar ausgebildet werden, indem der Zustand der jeweiligen aktivierten Sensoreinrichtung durch ein von dieser ausgehendes Signal über den zugeordneten Konverter in die Leiterschleife induziert und über die Spule zum Schaltgerät übertragen und dort abgeglichen sowie als entsprechender Befehl an den motorischen Antrieb rückgemeldet wird.

Hierfür ist es von Vorteil, wenn die Leiterschleife an einen Wechselstromkreis angeschlossen ist und eine Trägerfrequenz aufweist, auf die im Falle einer aktivierten Sensoreinrichtung der erzeugte Messwert auf die Trägerfrequenz zeitlich versetzt oder in Frequenzen mit unterschiedlichen Amplituden, wie zeitgleiche oder zeitversetzte Amplituden, aufmoduliert wird. Somit dienen diese zeitliche versetzen Signale der Erkennung der Messwerte aus den verschiedenen Sensoreinrichtungen.

Im bevorzugten Ausführungsbeispiel wird über das Schaltgerät ein zeitlich versetzter Impuls beispielsweise durch kurzes Abschalten der Trägerfrequenz aufgegeben. Dieser Impuls dient als Aufforderung für jeden Konverter bzw. für jede Sensoreinrichtung ein aufmoduliertes Signal als Messwert auf die Trägerfrequenz aufzumodulieren.

Dies erfolgt unter den einzelnen Sensoreinheiten bzw. Konvertern, ausgehend von dem Impuls bzw. dem Abschaltsignal, in unterschiedlich gewählten Zeiten, so dass jeder Konverter bzw. jede Sensoreinrichtung in der gleichen Frequenz ihren Messwert auf die Trägerfrequenz aufmoduliert. Auf diese Weise können die Messwerte der einzelnen Konverter untereinander identifiziert werden. Von Vorteil ist, dass die einzelnen aufmodulierten Signale von gleicher Amplitude gewählt werden können.

Weitere Merkmale und Vorteile der Erfindung ergeben sich aus der nachfolgenden Beschreibung mehrer Ausführungsbeispiele in Verbindung mit der Zeichnung; es zeigen:
- Fig. 1: eine Seitenansicht eines Schliesselements in der Form eines Werks-Schiebetors mit einer schematisch dargestellten induktiven Steuerung,
- Fig. 2: einen schematischen Sinuskurvenabschnitt einer Trägerfrequenz mit zeitversetzten aufmodulierten Frequenzen;
- Fig. 3: einen schematischen Sinuskurvenabschnitt einer Trägerfrequenz mit zeitversetzten Frequenzen, die unterschiedliche Amplituden aufweisen;
- Fig. 4: einen schematischen Verlauf einer Trägerfrequenz mit zeitversetzten aufmodulierten Messwerten unterschiedlicher Konverter bzw. Sensoreinrichtungen mit gleicher Amplitude.

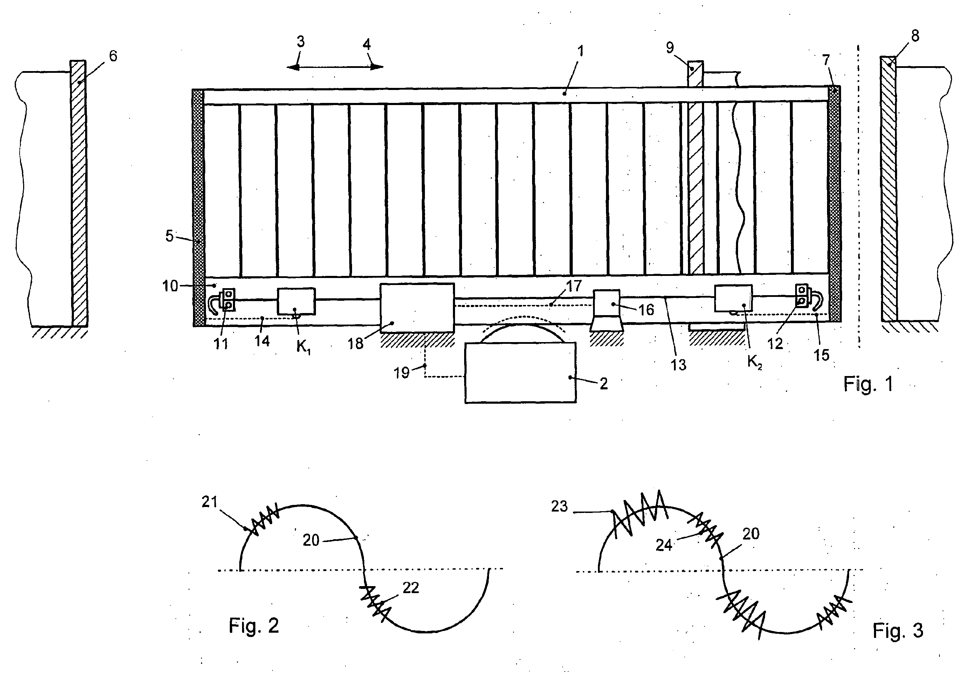

Die in Fig.1 dargestellte Seitenansicht eines Schliesselements in der Form eines werks-Schiebetores 1, kann mit Hilfe eines Antriebs 2 (z.B. Zahnstangenantrieb) horizontal verschoben werden, und zwar in Richtung des Pfeils 3 in Schliessstellung und in Richtung des Pfeils 4 in Öffnungsstellung. Die Schliessstellung ist erreicht, wenn das Schiebetor 1 mit seiner Schaltleiste - bezeichnet mit 5 - auf den mit 6 bezeichneten Torpfeiler trifft. Die komplette Öffnungsstellung des Schiebetores 1 ist wiederum erreicht, wenn dieses mit seiner Schaltleiste - bezeichnet mit 7 - an dem rückwärtigen mit 8 bezeichneten Torpfeiler anliegt. Zwischen einem U-förmig ausgebildeten ortsfesten Portal 9, von dem nur die rückwärtige Hälfte in Fig. 1 zu sehen ist, wird das Schiebetor 1 in seiner vertikalen Lage geführt, wobei in diesem Portal 9 alternativ auch der Antrieb für das Schiebetor 1 sowie diverse Sensoren einschliesslich einer programmierten Schaltung untergebracht sein können.

Das Schiebetor 1 besitzt ferner auf seinem unteren Holm 10 jeweils endseitig einen Montagewinkel 11 bzw. 12, wobei der Montagewinkel 11 mit einer Spannvorrichtung und der Montagewinkel 12 mit einer Druckfeder ausgestattet ist. Zwischen den Montagewinkeln 11 und 12 ist ein als Leiterschleife dienendes Stahlseil 13 gespannt, welches gleichzeitig elektrisch mit einer nicht dargestellten Laufschiene für das Schiebetor 1 verbunden ist.

Ferner ist an dem Holm 10 auf der linken Seite ein Konverter K1 vorgesehen, durch den das Stahlseil 13 geführt ist und an den die Schaltleiste 5 über eine Leitung 14 angeschlossen ist. Auf der rechten Seite des Holmes 10 ist ein zweiter Konverter K2 vorgesehen, durch den ebenfalls das Stahlseil 13 geführt ist und an den die Schaltleiste 7 über eine Leitung 15 angeschlossen ist. Schliesslich umgibt das Stahlseil 13 noch eine ortsfeste Spule 16, welche über eine Leitung 17 mit einem ortsfesten Schaltgerät 18 verbunden ist, wobei an letzteres der Antrieb 2 über eine Leitung 19 angeschlossen ist.

Die Leiterschleife in der Form des Stahlseils 13 ist mit einem Wechselstromkreis mit einer konstanten Trägerfrequenz 20 (z.B. 1 kHz) mit gleichbleibender Amplitude (Fig. 2 und 3) ausgestattet, auf die für den Konverter K1 zeitlich versetzte Frequenzen 21 bzw. 22 mit jeweils gleicher Amplitude aufmoduliert sind. Alternativ hierzu ist es auch möglich, dass die auf die Trägerfrequenz 20 aufmodulierten Frequenzen unterschiedliche Amplituden aufweisen und zeitversetzt sind, wie in Fig. 3 mit grösseren Amplituden 23 und kleineren Amplituden 24 veranschaulicht ist.

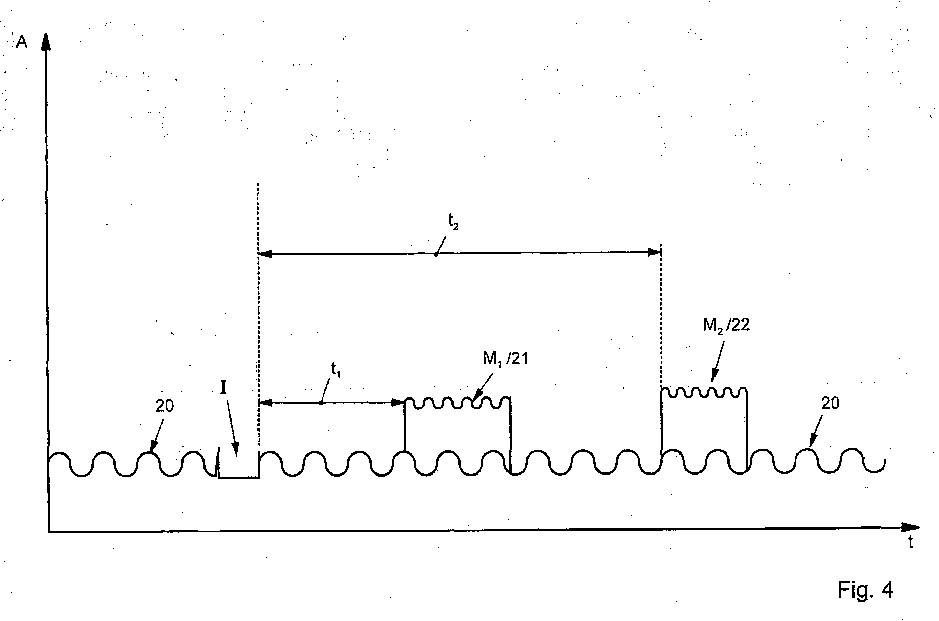

Gemäss dem bevorzugten Ausführungsbeispiel und dem Diagramm gemäss Figur 4 ist die Amplitude der Trägerfrequenz 20 über der Zeit t aufgezeigt.

Über das hier nicht dargestellte Schaltgerät 18 wird die Trägerfrequenz 20 zur Erzeugung eines Impulses I kurzzeitig abgeschaltet. Dieser Impuls I bzw. das kurzzeitige Abschalten der Trägerfrequenz 20 kann öfters wiederholt werden.

In einer wählbaren Zeitspanne t₁ wird dann auf die Trägerfrequenz 20 ein Messwerwert M₁ als Frequenz 21 auf diese Trägerfrequenz 20 aufmoduliert.

Nach einer einstellbaren Zeitspanne t₂ wird dann vom weiteren Konverter K2 ebenfalls dessen Messwertsignal M₂ als Frequenz 22 auf die Trägerfrequenz 20 aufmoduliert.

Bevorzugt werden die Messwerte M₁ und M₂ der Konverter K1 und K2 in gleichen Frequenzen und gleichen Amplituden auf die Trägerfrequenz 20, ausgehend vom Impuls I zeitlich versetzt aufmoduliert. Somit sind die einzelnen Konverter K1, K2 bis Kn jeweils einzeln unterscheidbar bzw. einzeln identifizierbar. Hierdurch erfolgt ein Synchronisierten der einzelnen Konverter K1, K2 bis Kn, die auf die Trägerfrequenz 20 einem Messwert M₁, M₂ als aufmoduliertes Signal bzw. Messgrösse senden.

Dabei wird vom eigentlichen Impuls I als Synchronisationsimpuls ausgegangen, um die einzelnen Messwerte M₁, M₂ oder weitere Messwerte von den jeweiligen einzelne Konvertern K1, K2 etc. identifizierbar zu erhalten.

Der horizontale Bewegungsablauf des Werks-Schiebetores 1 gemäss Fig. 1 erfolgt durch den schlupffreien Antrieb 2, wobei der Zustand einer aktivierten Schaltleiste, z.B. die Schaltleiste 5 durch ein mögliches Hindernis, ein Signal auslöst, das über den Konverter K1 in das Stahlseil 13 induziert und über die Spule 16 zum Schaltgerät 18 übertragen wird, von wo dann der Antrieb 2 den Befehl "Stopp" erhält. Entsprechendes gilt auch für den Konverter K2 und die Schliessstellung 5/6 bzw. Offenstellung 7/8.

Insgesamt ist mit der vorliegenden Erfindung ein induktives Signal-Übertragungs-System insbesondere für automatische Schiebetore geschaffen worden, das vorteilhaft auch bei Publikumsdurchgängen eingesetzt werden kann und das sich aufgrund der verschleissrreien Signalübertragung durch eine lange Lebensdauer und geringe Betriebskosten auszeichnet. Letzterer Umstand wird auch noch dadurch wesentlich unterstützt, dass durch eine separate sowie räumliche Zuordnung eines Konverters zu den jeweiligen Sensoren geringere Unterhalts- und Wartungsarbeiten anfallen, was auch die Flexibilität bei einer Torkonstruktion erhöht, da lange Verkabelungen entfallen. Schliesslich können durch die individuelle Modulation sämtliche Signale der verwendeten Sensoren über eine gemeinsame Leiterschleife und Spule dem Schaltgerät zugeführt werden, welches dann die Signale abgleicht und dabei die einzelnen verwendeten Sensoren und somit deren Signale erkennt und diese wiederum als entsprechende Befehle an den motorischen Antrieb weiter meldet.

**Bezugszeichenliste**

| | | | | | |
|---|---|---|---|---|---|
| 1 | Werks-Schlebetor | 34 | | 67 | |
| 2 | Antrieb | 35 | | 68 | |
| 3 | Richtung Schliessen | 36 | | 69 | |
| 4 | Richtung Öffnen | 37 | | 70 | |
| 5 | Schaltleiste | 38 | | 71 | |
| 6 | Torpfeiler | 39 | | 72 | |
| 7 | Schaltleiste | 40 | | 73 | |
| 8 | Torpfeiler | 41 | | 74 | |
| 9 | Portal | 42 | | 75 | |
| 10 | Holm | 43 | | 76 | |
| 11 | Montagewinkel | 44 | | 77 | |
| 12 | Montagewinkel | 45 | | 78 | |
| 13 | Stahlseil | 46 | | 79 | |
| 14 | Leitung | 47 | | | |
| 15 | Leitung | 48 | | | |
| 16 | Spule | 49 | | K1 | Konverter |
| 17 | Leitung | 50 | | K2 | Konverter |
| 10 | Schaltgerät | 51 | | | |
| 19 | Leitung | 52 | | | |
| 20 | Trägerfrequenz | 53 | | | |
| 21 | aufmodul. Frequenz | 54 | | | |
| 22 | aufmodul. Frequenz | 55 | | | |
| 23 | grössere Amplituden | 56 | | | |
| 24 | kleinere Amplituden | 57 | | | |
| K1 | Konverter | 58 | | | |
| K2 | Konverter | 59 | | I | Impuls |
| | | 60 | | | |
| | | 61 | | t₁ | Zeltspanne |
| | | 62 | | t₁ | Zeitspanne |
| | | 63 | | | |
| | | 64 | | M₁ | Messwerte |
| | | 65 | | M₂ | Messwert |

## Patentansprüche

1. System zur induktiven Signalübertragung für ein motorisch angetriebenes Schliesselement (1), wie Schiebetor, mit durch äussere Einwirkungen betätigbare Sensoreinrichtungen (5, 7), wie Schaltleisten, wobei längs eines vorbestimmten Weges des Schliesselements (1) an diesem eine Leiterschleife (13) vorgesehen ist, die mit einem am Schliesselement (1) angebrachten und mit den Sensoreinrichtungen (5, 7) elektrisch verbundenen Konvertern (K1, K2) sowie einer gegenüber dem Schliesselement (1) ortsfesten Spule und einem ortsfesten Schaltgerät (18) zusammenwirkt, wobei auf einen Impuls (I) einer Trägerfrequenz (20) zum Identifizieren einzelner Messwerte (M₁, M₂) einzelner Konverter (K1, K2) in unterschiedlichen Zeitabständen (t₁, t₂) die Konverter (K1 K2) Messwerte (M₁, M₂) in gleicher Frequenz und Amplitude auf die Trägerfrequenz (20) aufmodulieren,
dadurch gekennzeiahnet,
dass ausgehend von dem Impuls (I), als Abschaltsignal' der Trägerfrequenz (20) nach einer ersten wählbaren und festlegbaren Zeitspanne (t₁) der Messwert (M₁) des Konverters (K1) in bestimmter Amplitude und Zeit auf die Trägerfrequenz (20) aufmoduliert wird und zur Unterscheidung und Identifizierung vom Konverter (K2) nach einer längeren Zeitspanne (t₂), ausgehend vom Impuls (I) ein Messwert (M₂) des Konverters (K2) in gleicher Länge und Amplitude auf die Trägerfrequenz (20) aufmoduliert wird, wobei die Zeitspanne (t₂) grösser ist als die Summe aus Zeit des Messwertes (M₁) und der ersten Zeitspanne (t₁).

2. System nach Anspruch 1, **dadurch gekennzeichnet, dass** eine Mehrzahl (X1 + X2 + Xn) von Sensoreinrichtungen (6; 7) vorgesehen sind, die durch eine entsprechende Anzahl an Konverter (K1; K2) mittels der individuell modulierten Frequenzen (21, 22; 23, 24) einzeln von dem Schaltgerät (18) erkennbar sind.

3. System nach wenigstens einem der Ansprüche 1 bis 2, **dadurch gekennzeichnet, dass** die Sensoreinrichtungen als Schaltleisten (6; 7) oder Notausschalter ausgebildet sind, die nach einem mechanischen, optischen und pneumatischen Prinzip oder mit IR arbeiten.

4. System nach einem der Ansprüche 1 bis 3, **dadurch gekennzeichnet, dass** als Leiterschleife (13) ein zwischen den Endbereichen des Schliesselements (1) gespanntes Drahtseil dient, mit welchem die Konverter (K1; K2) in Verbindung stehen.

5. System nach einem der vorhergehenden Ansprüche, **dadurch gekennzeichnet, dass** stufenlose Bewegungsabläufe des Schliesselements (1) unterbrechbar ausgebildet sind, indem der Zustand der jeweiligen aktivierten Sensoreinrichtung (6, 7) durch ein von dieser ausgehenden Signals über den zugeordneten Konverter (K1; K2) in die Leiterschleife (13) induziert und über die ortfeste Spule (16) zur Schalteinheit (18) übertragen wird.

6. System nach den Ansprüchen 1 bis 5, **dadurch gekennzeichnet, dass** die Leiterschleife (13) an einen Wechselstromkreis angeschlossen ist und eine Trägerfrequenz (20) aufweist, auf die im Falle einer aktivierten Sensoreinrichtung (6, 7) der Messwert der jeweiligen Sensoreinrichtung (6, 7) aufmoduliert wird.

7. System nach Anspruch 6, **dadurch gekennzeichnet, dass** auf die Trägerfrequenz (20) jeweils für die einzelnen Konverter (K1; K2) unterschiedliche Frequenzen (21 - 24) aufmoduliert sind.

8. System nach einem der Ansprüche 1 bis 7, **dadurch gekennzeichnet, dass** die auf die Trägerfrequenz (20) aufmodulierten Messwerten (M₁, M₂) mit Frequenzen (21, 22) jeweils in ihren Amplituden gleich gross und zeitlich versetzt sind.

9. System nach einem der Ansprüche 1 bis 7, **dadurch gekennzeichnet, dass** die auf die Trägerfrequenz (20) aufmodulierten Frequenzen (23, 24) unterschiedliche Amplituden aufweisen.

10. System nach Anspruch 8, **dadurch gekennzeichnet, dass** die Amplituden zeitgleich oder zeitversetzt (23, 24) auf die Trägerfrequenz (20) aufmoduliert sind.

## Claims

1. System for inductive signal transmission for a motor-driven closing element (1), such as a sliding gate, having sensor devices (5, 7), such as switching strips, which are actuable by external influences, a conductor loop (13) being provided on the closing element (1) along a predetermined path of the latter, which loop interacts with a converters (K1, K2) attached to the closing element (1) and electrically connected to the sensor devices (5, 7) and also with a coil, stationary relative to the closing element (1), and with a stationary switching device (18), in which system upon a pulse (I) of a carrier frequency (20) the converters (K1, K2) modulate measured values (M₁, M₂) at the same frequency and amplitude at different time intervals (t₁, t₂) on the carrier frequency (20) in order to identify individual measured values (M₁, M₂) of individual converters (K1, K2),
**characterised**
**in that**, starting from the pulse (I) as a switch-off signal of the carrier frequency (20), the measured value (M₁) of the converter (K1) at a specific amplitude and time is modulated on the carrier frequency (20) after a first selectable and fixable duration (t₁), and for discrimination and identification from the converter (K2), a measured value (M₂) of the converter (K2) at the same length and amplitude is modulated on the carrier frequency (20) after a longer duration (t₂) starting from the pulse (I), the duration (t₂) being greater than the sum of the time of the measured value (M₁) and the first duration (t₁).

2. System according to Claim 1, **characterised in that** a plurality (X1 + X2 + Xn) of sensor devices (6; 7) are provided, which through a corresponding number of converters (K1; K2) are detectable individually by the switching device (18) by means of the individually modulated frequencies (21, 22; 23, 24).

3. System according to at least one of Claims 1 to 2, **characterised in that** the sensor devices are formed as switching strips (6; 7) or emergency stop switches, which operate according to a mechanical, optical and pneumatic principle or by IR.

4. System according to one of Claims 1 to 3, **characterised in that** a wire cable, which is stretched between the end regions of the closing element (1) and to which the converters (K1; K2) are connected, serves as the conductor loop (13).

5. System according to one of the preceding claims, **characterised in that** continuous movement sequences of the closing element (1) are of interruptible form by virtue of the fact that the state of the respective activated sensor device (6, 7) is induced, by a signal coming from the latter, in the conductor loop (13) via the associated converter (K1; K2) and is transmitted to the switching unit (18) via the stationary coil (16).

6. System according to Claims 1 to 5, **characterised in that** the conductor loop (13) is connected to an A.C. circuit and has a carrier frequency (20), on which the measured value of the respective sensor device (6, 7) is modulated in the case of an activated sensor device (6, 7).

7. System according to Claim 6, **characterised in that** different frequencies (21 - 24) are modulated on the carrier frequency (20) for each of the individual converters (K1; K2).

8. System according to one of Claims 1 to 7, **characterised in that** the measured values (M₁, M₂) which are modulated on the carrier frequency (20) and have frequencies (21, 22) are each of the same amplitudes and are offset in time.

9. System according to one of Claims 1 to 7, **characterised in that** the frequencies (23, 24) modulated on the carrier frequency (20) have different amplitudes.

10. System according to Claim 8, **characterised in that** the amplitudes are modulated on the carrier frequency (20) at the same time or offset in time (23, 24).

## Revendications

1. Système de transfert inductif de signaux pour un élément de fermeture entraîné par un moteur (1), tel que porte coulissante, avec des moyens de détection (5, 7), tels que barre de commutation, actionnables par des actions externes, dans lequel est prévue, le long d'un trajet prédéterminé de l'élément de fermeture (1), sur ce dernier, une boucle conductrice (13) coopérant avec des convertisseurs (K1, K2) placés sur l'élément de fermeture (1) et connectés électriquement aux moyens de détection (5, 7) ainsi qu'avec une bobine stationnaire par rapport à l'élément de fermeture (1) et un organe de commutation stationnaire (18), dans lequel les convertisseurs (K1, K2) modulent, à une impulsion (I) d'une fréquence porteuse (20) pour identifier des valeurs de mesure individuelles (M₁, M₂) des convertisseurs individuels (K1, K2) à des intervalles de temps différents (t₁, t₂), des valeurs de mesure (M₁, M₂) de même fréquence et amplitude sur la fréquence porteuse (20),
**caractérisé par le fait**
**que** la valeur de mesure (M₁) du convertisseur (K1) est, partant de l'impulsion (I) comme signal de coupure de la fréquence porteuse (20) après un premier laps de temps pouvant être sélectionné et fixé (t₁), modulée en amplitude et temps déterminés sur la fréquence porteuse (20) et que, pour distinguer et identifier le convertisseur (K2) après un laps de temps plus long (t₂), une valeur de mesure ( M2 ) du convertisseur (K 2) est, partant de l'impulsion (I), modulée avec la même longueur et amplitude, sur la fréquence porteuse (20), le laps de temps (t₂) étant supérieur à la somme du temps de la valeur de mesure (M₁) et du premier laps de temps (t₁).

2. Système selon la revendication 1, **caractérisé par le fait qu'**il est prévu une pluralité (X1 + X2 + Xn) de moyens de détection (6 ; 7) pouvant être identifiés individuellement par l'organe de commutation (18), grâce à un nombre correspondant de convertisseurs {K1, K2), au moyen des fréquences modulées individuellement (21, 22; 23, 24).

3. Système selon au moins l'une des revendications 1 à 2, **caractérisé par le fait que** les moyens de détection sont réalisés sous forme de barre de commutation (6, 7) ou d'interrupteurs de secours qui fonctionnent selon un principe mécanique, optique et pneumatique ou à rayons IR.

4. Système selon l'une des revendications 1 à 3, **caractérisé par le fait que** la boucle conductrice (13) sert de câble tendu entre les zones d'extrémité de l'élément de fermeture (1) auquel sont reliés les convertisseurs (K1, K2).

5. Système selon l'une des revendications précédentes, **caractérisé par le fait que** les déroulements de mouvement en continu de l'élément de fermeture (1) sont réalisés de manière à pouvoir être interrompus en ce que l'état du moyen de détection activé respectif (6, 7) est induit par un signal partant de ce dernier, par l'intermédiaire du convertisseur (K1, K2) associé, dans la boucle conductrice (13) et est transmis par l'intermédiaire de la bobine stationnaire (16) à l'unité de commutation (18).

6. Système selon les revendications 1 à 5, **caractérisé par le fait que** la boucle conductrice (13) est raccordée à un circuit de courant alternatif et présente une fréquence porteuse (20) sur laquelle est modulée, dans le cas d'un moyen de détection activé (6, 7), la valeur de mesure du moyen de détection respectif (6, 7).

7. Système selon la revendication 6, **caractérisé par le fait que** sur la fréquence porteuse (20) sont modulées, pour chacun des convertisseurs individuels (K1, K2), des fréquences différentes (21 à 24).

8. Système selon l'une des revendications 1 à 7, **caractérisé par le fait que** les valeurs de mesure (M₁, M₂) modulées sur la fréquence porteuse (20) sont, chacune, d'amplitude identique aux fréquences (21, 22) et décalées dans le temps.

9. Système selon l'une des revendications 1 à 7, **caractérisé par le fait que** les fréquences (23, 24) modulées sur la fréquence porteuse (20) présentent des amplitudes différentes.

10. Système selon la revendication 8, **caractérisé par le fait que** les amplitudes sont modulées sur la fréquence porteuse (20) en même temps ou de manière décalée dans le temps (23, 24).
